# EUROPEAN PATENT APPLICATION

(11) **EP 4 340 192 A1**
(43) Date of publication of application: **20.03.2024**
(21) Application number: 22196350.7
(22) Date of filing: 19.09.2022
(51) Int. Cl.: H02K 15/02

(54) **AXIAL-FLUX STATOR CORE**

(71) Applicant: Koenigsegg Automotive AB, 262 74 Ängelholm (SE)
(72) Inventor: SZEKELY, András Péter, 262 63 ÄNGELHOLM (SE); ERIKSSON HÄLL, Rickard, 286 95 EKET (SE); POSTARIU, Dragos-Mihai, 262 70 STRÖVELSTORP (SE); KRÜGER BECK, Martin, 262 33 ÄNGELHOLM (SE)
(74) Representative: Brann AB

(57) **Abstract**

An axial flux stator core (50) and a manufacturing thereof is proposed. The axial flux stator core (50) has a spirally layered structure (24) , wherein the axial flux stator core (50) comprises a metal strip (14) having a longitudinal first side (16) and a longitudinal second side (18) and that is wound to form the spirally layered structure (24). The first side (16) of the metal strip (14) has a plurality of slots (20) having a slot width that vary along the metal strip (14), the first side (16) forms a plurality of stator teeth (26), the slots (20) define a tooth separation between each pair of neighboring stator teeth (26), and the second side (18) forms an annular stator yoke (28) connecting the stator teeth (26).

## Description

### TECHNICAL FIELD

The proposed technology generally relates to the field of axial flux motors and generators, and in particular to axial flux stators.

### BACKGROUND

An axial flux motor, or axial gap motor, is an electric motor having an architecture in which the magnetic flux between the rotor and the stator is aligned parallel with the axis of rotation.

One type of axial flux stators has an annular stator yoke with stator teeth extending axially relative to the stator yoke. The stator yoke and the stator teeth jointly form a stator core. Coils of an electrically insulated conductor, such as a wire or a flat copper strip, are wound around each stator tooth for forming a magnetic field parallel with the axis of rotation. It is known to manufacture such axial flux stator cores from a metal strip by forming a plurality of slots in one side of a metal strip and winding the metal strip to form a spirally layered structure. The side without slots forms the annular stator yoke and the side with the slots forms the stator teeth. The slots define the tooth separation between the stator teeth. The slots have a fixed shape, which means that the tooth separation does not depend on the radius. The innermost and outermost layers of the spirally layered structure have the same toot separation as the rest of the layers. In extension, this means that the stator teeth have a radial profile with sharp corners at the innermost and outer most layers.

Axial flux motors are typically shorter and wider than equivalent radial flux motors. In some applications it is an advantage to have a narrower width, for example when mounted coaxially on a drive shaft or drive axle in a car. The diameter of the stator generally sets the width of an axial flux motor. Additionally, in axial flux stators having a core with a spirally layered structure, the coils on the stator teeth protrude radially outward from the stator yoke and stator teeth, thus contributing to the diameter of the stator.

### SUMMARY

It is an object of the proposed technology to provide a greater flexibility in the forming the coils on the stator teeth in axial flux stators. It is a further object of the proposed technology to reduce the width of axial flux stators having a spirally layered structure.

In a first aspect of the proposed technology, a method is proposed for manufacturing an axial flux stator core from a metal strip, or elongated metal sheet, having a longitudinal first side and a longitudinal second side. The method comprises: forming a plurality of slots in the first side of the metal strip, wherein each slot has a slot width, and the slot widths vary, or change, along the metal strip, or the first side. The method further comprises: winding, or rolling, the metal strip to form a spirally layered, or laminated, structure, wherein the first side forms a plurality of stator teeth, the slots define a tooth separation, or tooth gap, between each pair of neighboring stator teeth, and the metal strip forms an annular stator yoke connecting the stator teeth.

In a second aspect of the proposed technology, a system is proposed for manufacturing an axial flux stator core from a metal strip, or elongated metal sheet, having a longitudinal first side and a longitudinal second side. The system comprises: a punching tool configured for forming a plurality of slots in the first side of the metal strip, wherein each slot has a slot width and the slot widths vary, or change, along the metal strip, or the first side. The system further comprises: a rolling tool, or winding roller, configured for winding, or rolling, the metal strip to form a spirally layered, or laminated, structure, wherein the first side forms a plurality of stator teeth, the slots define a tooth separation, or tooth gap, between each pair of neighboring stator teeth, and the metal strip forms an annular stator yoke connecting the stator teeth.

In a third aspect of the proposed technology, an axial flux stator core is proposed having a spirally layered, or laminated, structure, wherein the axial flux stator core comprises a metal strip, or elongated metal sheet, having a longitudinal first side and a longitudinal second side and that is wound to form the spirally layered structure. The first side of the metal strip has a plurality of slots, each slot has a slot width, and the slot widths vary, or change, along the metal strip, or the first side. The first side forms a plurality of stator teeth, the slots define a tooth separation, or tooth gap, between each pair of neighboring stator teeth, and the metal strip forms an annular stator yoke connecting the stator teeth.

In a fourth aspect of the proposed technology, a method is proposed for manufacturing an axial flux stator. The method may comprise any of the steps or features of the first aspect of the proposed technology. Additionally, the method further comprises: forming, or winding, a coil of an electrically insulated conductor on each of the stator teeth.

In a fifth aspect of the proposed technology, an axial flux stator is proposed comprising the axial flux stator core according to the third aspect of the proposed technology. The axial flux stator further comprises: a plurality of coils individually positioned on, or wound around, the stator teeth. Worded differently, the axial flux stator further comprises: a plurality of coils, wherein each coil is individually positioned on, or wound around, one of the stator teeth. It is understood that the coils are electromagnetic coils. It is further understood that each coil may comprise an electrically insulated conductor.

For example, the axial flux stator core or the axial flux stator may be for an electric motor or an electric generator. In a sixth aspect of the proposed technology, an axial flux motor or generator is proposed comprising the axial flux stator core according to the third aspect of the proposed technology, or the axial flux stator according to the fifth aspect of the proposed technology.

The varying slot widths along the metal strip means that the tooth separation varies radially relative in the spirally layered structure. This contributes to a greater flexibility in the forming the coils on the stator teeth and allows for an optimization of the radial profile of the stator teeth. For example, the radial profile can be adapted for different types or dimensions and shapes of the insulated conductors forming the coils wound around the stator teeth.

The metal strip may be of silicon steel or an electrical steel. It is understood that the forming of the plurality of slots and the winding of the metal strip are synchronized such the slots overlap in the spirally layered structure and form the stator teeth at the first side of the metal strip.

It is understood that the axial flux stator core defines an axial direction, a radial direction, and a tangential direction relative to the axis of rotation during use, for example in an electric motor or generator. Similarly, the spirally layered structure defines an axial direction, a radial direction, and a tangential direction relative to the axis of rotation during winding of the metal strip. The axis of rotation during use and during winding may be the same, which means that the mentioned directions coincide. For example, the axial direction is the same both during use and during winding.

A longitudinal side is here understood as running lengthwise relative to the strip. It is specified that the slots have a slot width that vary, or change, along the metal strip. It is understood that the longitudinal first side and a longitudinal second side may be parallel. It is specified that the slot widths vary along the metal strip. Worded differently, consecutive slots may have different slot widths. It is understood that each tooth extends radially, tangentially, and axially relative to the spirally layered structure. It is further understood that each slot extends tangentially and axially. It is further understood that the tooth separation is aligned tangentially to the spirally layered structure.

The spirally layered structure may have a plurality of spirally, or radially, arranged layers. It is understood that the layers contact one another to form a radially sandwiched structure. It is further understood that the spirally layered structure encompasses a radially outermost layer and a radially innermost layer. The slots of a layer, or each layer, of the spirally layered structure may have the same slot width.

The spirally arranged structure may have a radially inner half and a radially outer half that jointly form the spirally arranged structure. It is understood that the inner half and the outer half join at the middle between the innermost layer and the outermost layer. It is further understood that the innermost layer forms part of the inner half and the outermost layer forms part of the outer half. It is further understood that the innermost layer and the outermost layer respectively are composed of a plurality of the layers. The slot widths of the slots in the radially outermost layer may be greater than the slot widths of the slots in the other layers of the outer half. The slot widths of the slots in the radially innermost layer may be greater than the slot widths of the slots in the other layers of the inner half.

The slot width of slots in in the outermost layer may be greater than the slot width in the neighboring second outermost layer. Similarly, the slot width of slots in in the second outermost layer may be greater than the slot width in the neighboring third outermost layer. Similarly, the slot width of slots in in the third outermost layer may be greater than the slot width in the neighboring fourth outermost layer. The slot width in the innermost layer may be equal to or greater than the slot width in the neighboring second innermost layer. The slots width may be the same in and between the majority, or more than 60, 70, or 80%, of the spirally arranged layers.

As mentioned above, neighboring stator teeth defines a tooth separation, or tooth gap, between them. The tooth separation may vary depending on the radius, or between layers. The tooth separation in the outermost layer may be greater than the tooth separation in the neighboring inner layer. The tooth separation in the innermost layer may be greater than the tooth separation in the neighboring outer layer. Worded differently, each of the stator teeth may have a tooth width. It is understood that the tooth width is tangential to the spirally layered structure. The tooth width may vary depending on the radius, or between layers. The tooth width at the outermost layer may be smaller than the tooth width at the neighboring inner layer. The tooth width at the innermost layer may be smaller than the tooth width at the neighboring outer layer. The features described here contribute to a radial profile, or radial cross-section, of the stator teeth with rounded corners. The rounded corners allow for the coils to be tighter wound on the teeth reducing the radial protrusion of the coils relative to the teeth.

The plurality of slots may comprise: a first subset of slots and a second subset of slots. The slots in the first subset may have equal slot widths and the slots in the second subset may have equal slot widths. The slot width or widths of the second subset is greater than the slot width or widths of the first subset. The proposed system may further comprise: a controller connected to the punching tool and the rolling tool. The controller may be configured for synchronizing the punching tool and the rolling tool such that the slots overlap in the spirally layered structure and forms the stator teeth at the first side of the metal strip. The controller may be configured to operate the punching tool and the rolling tool for varying the slot widths along the metal strip, or along the first side. The controller may be configured to operate the punching tool and the rolling tool for forming the first subset of slots and the second subset of slots.

In the proposed method, winding the metal strip may comprise: positioning the slots of the first subset in a first layer of the spirally layered structure, and positioning the slots of the second subset in a second layer of the spirally layered structure. In the proposed system, the controller may configured to operate the punching tool and the rolling tool for positioning the slots of the first subset in a first layer of the spirally layered structure, and for positioning the slots of the second subset in a second layer of the spirally layered structure. In the proposed axial flux stator core, the slots of the first subset may be positioned in a first layer of the spirally layered structure, and the slots of the second subset may be positioned in a second layer of the spirally layered structure.

The second layer may be positioned radially outside of the first layer. For example, the second layer may be the outermost layer and the first layer may be positioned between the innermost layer and the outermost layer. Alternatively, the second layer may be the innermost layer and the first layer may be positioned between the innermost layer and the outermost layer. The first layer and the second layer may be juxtaposed.

In the proposed method and axial flux stator core, the plurality of slots may be formed by a cooperating punch and die notching the first side of the metal strip. The punching tool in the proposed system may comprise a cooperating punch and die configured for notching the first side of the metal strip and form the plurality of slots. It is understood that a single notching forms a slot with fixed dimensions, or a fixed slot width.

Each slot of the first subset may be formed by a single notching. The controller may configured to operate the punching tool and the rolling tool for forming each slot of the first subset by a single notching. Each slot of the second subset may be formed by a first notching, a shifting the metal strip relative to the punch and the die, and a second notching overlapping the first notching. The controller may configured to operate the punching tool and the rolling tool for forming each slot of the second subset by a first notching, a shifting the metal strip relative to the punch and the die, and a second notching overlapping the first notching.

Worded differently, each slot in the first subset may be formed by notching a first number of times, and each slot in the second subset may be formed by notching a second number of times that is greater than the first number of times. The controller may be configured to operate the punching tool and the rolling tool for forming each slot in the first subset by notching a first number of times, and for forming each slot in the second subset by notching a second number of times that is greater than the first number of times. The notchings forming a slot may overlap. It is understood that this required the number of notchings to be greater than one. For example, each slot in the first subset may be formed by s single notching and each slot in the second subset may be formed by two overlapping notchings, or each slot in the first subset may be formed by two overlapping notchings and each slot in the second subset may be formed by three overlapping notchings.

The proposed method may further comprise: forming one or more weld seams joining neighboring layers of the spirally layered structure. The proposed system may further comprise: a weld configured for forming one or more weld seams joining neighboring layers of the spirally layered structure. The proposed axial flux stator core may comprise one or more weld seams joining neighboring layers of the spirally layered structure. The weld seams may prevent the spirally layered structure from unwinding. The weld seams may extend radially relative to the spirally layered structure. Each weld seam may extend over all layers of the spirally layered structure. The weld seams may be located on the second side, or on the stator yoke.

It is specified that the metal strip forms an annular stator yoke connecting the stator teeth. Additionally, the second side of the metal strip may form the annular stator yoke. This means that the second side does not forms a plurality of additional stator teeth.

Alternatively, the method according to the first aspect of the proposed technology may further comprise: forming a plurality of additional slots in the second side of the metal strip, wherein each second slot has a slot width, and the slot widths vary, or change, along the metal strip, or the second side. In the second aspect of the proposed technology, the punching tool may further be configured for forming a plurality of additional slots in the second side of the metal strip, wherein each additional slot has a slot width and the slot widths vary, or change, along the metal strip, or the second side. In the third aspect of the proposed technology, the second side of the metal strip may have a plurality of additional slots, each additional slot has a slot width, and the slot widths vary, or change, along the metal strip, or the second side. In the fourth aspect of the proposed technology, the method may further comprise: forming, or winding, a coil of an electrically insulated conductor on each of the additional stator teeth. In the fifth aspect of the proposed technology, the axial flux stator may further comprise: a plurality of coils individually positioned on, or wound around, the additional stator teeth. Worded differently, each coil may be individually positioned on, or wound around, one of the stator teeth or the additional stator teeth. In the spirally layered structure, the second side may form a plurality of additional stator teeth, the additional slots define a tooth separation, or tooth gap, between each pair of neighboring additional stator teeth, and the annular stator yoke connects the additional stator teeth. The annular stator yoke may be positioned between the stator teeth and the additional stator teeth. The additional slots may have the same features or be provided in the same manner as the slots. Similarly, the additional stator teeth may have the same features or be provided in the same manner as the stator teeth.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
Fig. 1 is a schematic illustration of a system for manufacturing an axial flux stator core,
Fig. 2 is a perspective view of an axial flux stator core during manufacturing using the system of Fig. 1,
Figs. 3a to 3c are plane projections showing the final geometry of the axial flux stator core of Fig. 2,
Fig. 4 is a plane projection showing the position of a coil on one of the stator teeth of the axial flux stator core of Fig. 2, and
Fig. 5 is a perspective view of an axial flux stator core having additional stator teeth.

### DETAILED DESCRIPTION OF THE DRAWINGS

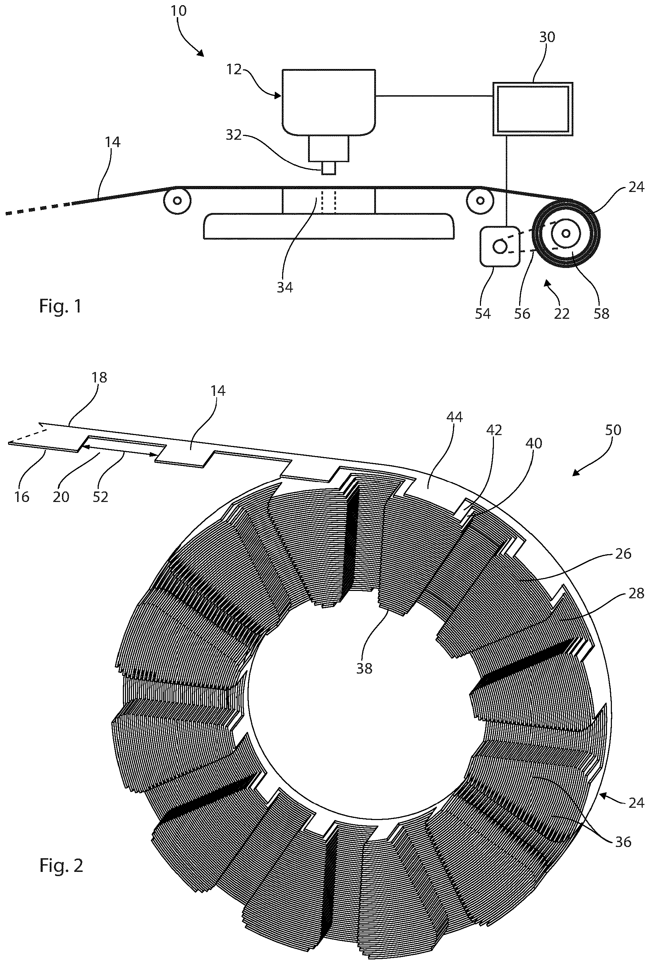

A system 10 for manufacturing an axial flux stator core 50 is schematically illustrated in Fig. 1. The system 10 has a punching tool 12 and a metal strip 14 of silicon steel is fed into the punching tool 12. The metal strip 14 has a longitudinal first side 16 and a longitudinal second side 18. The punching tool 12 has a cooperating punch 32 and die 34 that notch the first side 16 of the metal strip 14 and form a plurality of slots 20 at the first side 16.

The system 10 also has a rolling tool 22 with a roller 58 operationally connected to an electric motor 54 by a belt 56. The rolling tool 22 winds the metal strip 14 on the roller 58 after it has passed through the punching tool 12. This way a spirally layered structure 24 is formed having a plurality of spirally arranged and sandwiched layers 36 that contact one another.

The system 10 has a controller 30 connected to and synchronizing the punching tool 12 and the rolling tool 22 such that the slots 20 overlap in the spirally layered structure 24. This way, the first side 16 of the metal strip 14 forms a plurality of stator teeth 26 and the slots 20 define the tooth separation between neighboring pairs of stator teeth 26. The second side 18 of the metal strip 14 forms an annular stator yoke 26 that connects the stator teeth 26.

The controller 30 operates the punching tool 12 and the rolling tool 22 such that several subsets of slots are formed. An initial subset is formed in which the slots 20 are positioned in the innermost layer 38 of the spirally layered structure 24. Each of the slots 20 in the initial subset are formed by the controller 30 operating the punching tool 12 and the rolling tool 22 to form the slot by punching a first notching, shifting the metal strip 14 relative to the punch 32 and the die 34, and punching a second notching overlapping the first notching. This way, a wider slot width is achieved than with a single notching. The shifting of the metal strip 14 is sequentially decreased, which means that the slot width varies along the metal strip 14 in the innermost layer 38. A second subset is formed in which the slots 20 are positioned between the innermost layer 38 and the third outermost layer 40. The controller 30 operates the punching tool 12 and the rolling tool 22 to form each of the slot 20 by a single notching by the punching tool 12, which means that the slots 20 of the second subset have the same slot width, and the slot width is narrower than in the initial subset. A third subset is formed in which the slots 20 are positioned in the third outermost layer 40. Each of the slots 20 in the third subset are formed by the controller 30 operating the punching tool 12 and the rolling tool 22 to form the slot 20 by punching a first notching, shifting the metal strip 14 relative to the punch 32 and the die 34, and punching a second notching overlapping the first notching. This way, a wider slot width is achieved than for the second subset. The shifting of the metal strip is the same for all the slots 20 of the third subset, which means that they have the same slot width. A fourth subset is formed in which the slots 20 are positioned in the second outermost layer 42. The slots 20 of the fourth subset are formed in the same manner as the slots 20 of the third subset, but with a greater shifting of the metal strip 14 between the first notching and the second notching resulting in a greater slot width. A final subset is formed in which the slots 20 are positioned in the outermost layer 44. The slots 20 of the final subset are formed in the same manner as the slots 20 of the fourth subset, but with a greater shifting of the metal strip 14 between the first notching and the second notching resulting in an even greater slot width. The slot width of a slot 20 is indicated by the double-headed arrow 52 in Fig. 2.

It should be noted that numbering of the layers and subsets corresponds to the radial position in the spirally layered structure 24 and that different numberings can be used not relating to the radial position. For example, the fourth outermost layer may be considered a first layer, the slots 20 in the fourth outermost layer may be considered a first subset, the third outermost layer 40 may be considered a second layer, and the slots 20 in the third outermost layer 40 may be considered a second subset. This means that the slots 20 in the first subset have equal slot widths formed by a single notching and the slots in the second subset have equal slot widths formed by two notchings, and the slot width of the second subset is greater than the slot width or widths of the first subset.

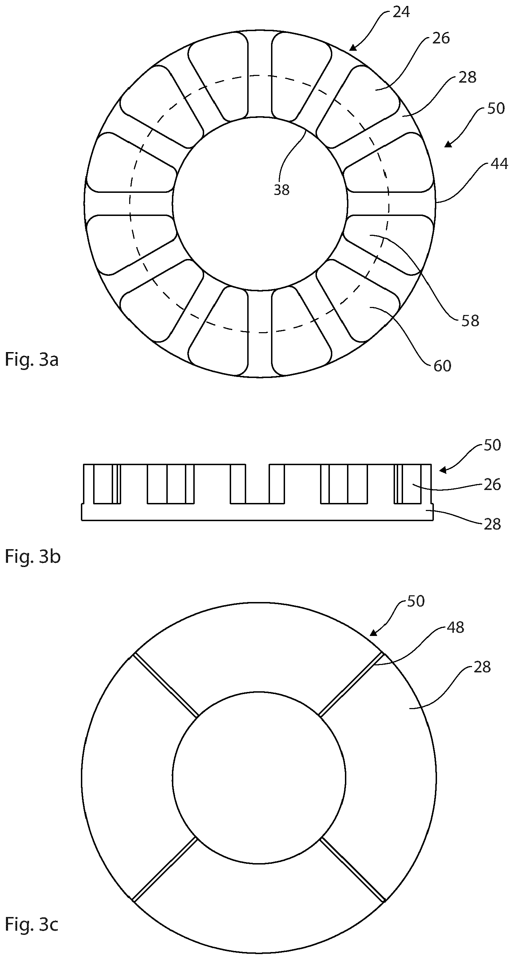

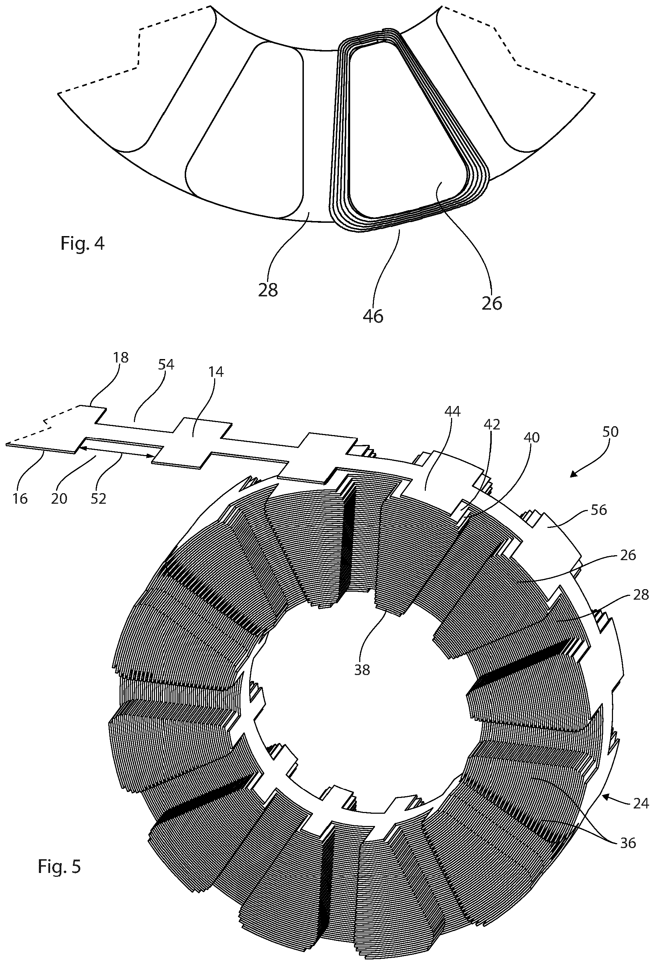

The resulting spirally layered structure 24 has an outermost layer 44 with slot widths that are greater than the slot width in the neighboring inner layer 42. The slot widths in the innermost layer 38 are equal to and greater than the slot width in the neighboring outer layer. This means that the tooth separation varies depending on the radius. Each of the stator teeth 26 has a tooth width aligned tangential to the spirally layered structure 24 and the tooth width varies depending on the radius. The tooth width at the outermost layer 44 is smaller than the tooth width at the neighboring inner layer 42, and the tooth width at the innermost layer 38 is smaller than the tooth width at the neighboring outer layer. The radial profile of the stator teeth 26 has rounded corners, which can be seen in Fig. 3a. This allows for a coil 46 to be tighter wound and protrude less radially relative to the stator teeth 26, as shown in Fig. 4.

The system 10 further has a weld (not shown) that forms four radially extending weld seams 48 on the stator yoke 28 joining neighboring layers of the spirally layered structure 24 and preventing it from unwinding once removed from the rolling tool, see further Fig. 3c.

The spirally arranged structure 24 has a radially inner half 58 and a radially outer half 60 that join at the middle between (dashed line) between the innermost layer 38 and the outermost layer 44, as is shown in Fig. 3a. The slot widths 52 of the slots 20 in the radially outermost layer 44 are greater than the slot widths 52 of the slots 20 in the other layers of the outer half 60, which can be seen in Fig. 2. Similarly, the slot widths 52 of the slots 20 in the radially innermost layer 38 are greater than the slot widths 52 of the slots 20 in the other layers of the inner half 58.

It is shown above that the system 10 performs a method in which an axial flux stator core 50 is manufactured from a metal strip 14 having a longitudinal first side 16 and a longitudinal second side 18. In summary, slots are formed in the first side 16 of the metal strip and the slot widths vary along the metal strip 14. The metal strip 14 is rolled to form a spirally layered structure 24 with the first side forming a plurality of stator teeth 26 and the second side forming an annular stator yoke 28 connecting the stator teeth 26.

The resulting axial flux stator core 50 has a spirally layered structure 24 formed by a rolled metal strip 14 having a longitudinal first side 16 and a longitudinal second side 18. The overall geometry of the stator core 50 is shown in Figs. 3a to 3c. The first side 16 of the metal strip 14 has a plurality of slots 20 having a width that vary along the metal strip 14. The first side 16 forms a plurality of stator teeth 26 and the second side 18 forms an annular stator yoke 28 connecting the stator teeth 26.

To manufacture an axial flux stator (not shown), coils 46 of electrically insulated flat copper strips are winded on each of the stator teeth 26, as illustrated in Fig. 4. The axial flux stator (not shown) can be installed in an axial flux motor or generator (not shown).

An alternative embodiment of a spirally layered structure 24 for an axial flux stator core 50 is shown in Fig. 5. The structure 24 has the features shown in Fig. 2. Additionally, it further has a plurality of additional teeth 56 formed by additional slots 54 in the second side 18 of the metal strip 14. The spirally layered structure 24 is manufactured by a system 10 similar to that described in relation to Fig. 1. The system 10 has an additional punching tool (not shown) with an additional cooperating punch (not shown) and die (not shown) that notch the second side 18 of the metal strip 14 and form the plurality of additional slots 54 in the second side 18. The slots on the first side 16 and the additional slot 54 on the second side 18 are arranged pairwise. The controller 30 of the system is connected to and controls the additional punching tool (not shown) such that in each pair the additional slot 54 is positioned right across from and has the same slot width 52 as the slot 20. The controller 30 operates the additional punching tool (not shown) in the same manner as the punching tool 12. For example, a varying slot width 52 is achieved by punching two overlapping notchings with the rolling tool 22 varying the shifting of the metal strip 14 between the notchings. When the rolling tool 22 forms the spirally layered structure 24, the additional slots 54 overlap in the same manner as the slots 20 and forms the additional teeth 56 at the second side 18.

### ITEM LIST

10 system
12 punching tool
14 metal strip
16 first side of metal strip
18 second side of metal strip
20 slots
22 rolling tool
24 spirally layered structure
26 stator teeth
28 stator yoke
30 controller
32 punch
34 die
36 layers
38 innermost layer
40 third outermost layer
42 second outermost layer
44 outermost layer
46 coil
48 weld seams
50 axial flux stator core
52 slot width
54 additional slots
56 additional teeth
58 radially inner half of spirally layered structure
60 radially outer half of spirally layered structure

## Claims

1. A method for manufacturing an axial flux stator core (50) from a metal strip (14) having a longitudinal first side (16) and a longitudinal second side (18), wherein the method comprises:
- forming a plurality of slots (20) in the first side (16) of the metal strip (14), wherein each slot (20) has a slot width and the slot widths (52) vary along the metal strip (14), and
- winding the metal strip (14) to form a spirally layered structure (24), wherein the first side (16) forms a plurality of stator teeth (26), the slots (20) define a tooth separation between each pair of neighboring stator teeth (26), and the metal strip (14) forms an annular stator yoke (28) connecting the stator teeth (26).

2. The method according to claim 1, wherein the spirally layered structure (24) has a plurality of spirally arranged layers (36) encompassing a radially outermost layer (44) and a radially innermost layer (38), and the slot width of the slots (20) in the outermost layer (44) is greater than the slot width in the neighboring second outermost layer (42).

3. The method according to claim 1 or 2, wherein the slot width of the slots (20) in the second outermost layer (42) is greater than the slot width in the neighboring third outermost layer (40).

4. The method according to claim 1, wherein the spirally layered structure (24) has a plurality of spirally arranged layers (36) encompassing a radially outermost layer (44) and a radially innermost layer (38), the spirally arranged structure (24) has a radially inner half (58) and a radially outer half (60) that jointly form the spirally arranged structure (24), and the slot widths (52) of the slots (20) in the radially outermost layer (44) is greater than the slot widths (52) of the slots (20) in the other layers of the outer half (60).

5. The method according to any of the claims 1 to 4, wherein the plurality of slots (20) comprises a first subset of slots (20) and a second subset of slots (20), the slots (20) in the first subset have equal slot widths (52) and the slots (20) in the second subset have equal slot widths (52), and the slot width of the second subset is greater than the slot width of the first subset.

6. The method according to claim 5, wherein winding the metal strip (14) comprises:
positioning the slots (20) of the first subset in a first layer of the spirally layered structure (24) and positioning the slots (20) of the second subset in a second layer of the spirally layered structure (24), wherein the second layer is positioned radially outside of the first layer.

7. The method according to any of the claims 1 to 6, wherein the plurality of slots (20) are formed by a cooperating punch (32) and die (34) notching the first side (16) of the metal strip (14), each slot (20) of the first subset is formed by a single notching, and each slot (20) of the second subset is formed by a first notching, a shifting the metal strip (14) relative to the punch (32) and the die (34), and a second notching overlapping the first notching.

8. An axial flux stator core (50) having a spirally layered structure (24), wherein the axial flux stator core (50) comprises a metal strip (14) having a longitudinal first side (16) and a longitudinal second side (18) and that is wound to form the spirally layered structure (24), the first side (16) of the metal strip (14) has a plurality of slots (20), wherein each slot (20) has a slot width and the slot widths (52) vary along the metal strip (14), the first side (16) forms a plurality of stator teeth (26), the slots (20) define a tooth separation between each pair of neighboring stator teeth (26), and the second side (18) forms an annular stator yoke (28) connecting the stator teeth (26).

9. The axial flux stator core (50) according to claim 8, wherein the spirally layered structure (24) has a plurality of spirally arranged layers (36), the slot width of slots (20) in in the outermost layer (44) is greater than the slot width in the neighboring second outermost layer (42), the slot width of the slots (20) in in the second outermost layer (42) is greater than the slot width in the neighboring third outermost layer (40), and the slot widths (52) are the same in and between the majority of the spirally arranged layers (36).

10. The axial flux stator core (50) according to claim 8 or 9, wherein the plurality of slots (20) comprises a first subset of slots (20) and a second subset of slots (20), and the slots (20) in the first subset have equal slot widths (52) and the slots (20) in the second subset have equal slot widths (52).

11. The axial flux stator core (50) according to claim 12, wherein the slots (20) of the first subset are positioned in a first layer of the spirally layered structure (24), the slots (20) of the second subset are positioned in a second layer of the spirally layered structure (24), the slot width of the second subset is greater than the slot width of the first subset, and the second layer is positioned radially outside of the first layer.

12. A system (10) for manufacturing an axial flux stator core (50) from a metal strip (14) having a longitudinal first side (16) and a longitudinal second side (18), wherein the system (10) comprises:
- a punching tool (12) configured for forming a plurality of slots (20) in the first side (16) of the metal strip (14), wherein each slot (20) has a slot width, and the slot widths (52) vary along the metal strip (14), and
- a rolling tool (22) configured for winding the metal strip (14) to form a spirally layered structure (24), wherein the first side (16) forms a plurality of stator teeth (26), the slots (20) define a tooth separation between each pair of neighboring stator teeth (26), and the second side (18) forms an annular stator yoke (28) connecting the stator teeth (26).

13. A method for manufacturing an axial flux stator, wherein the method comprises the method according to any of the claims 1 to 7, and the method further comprises:
- forming a coil (46) of an electrically insulated conductor on each of the stator teeth (26).

14. An axial flux stator comprising the axial flux stator core (50) according to any of the claims 8 to 11, wherein the axial flux stator further comprises: a plurality of coils (46) individually positioned on the stator teeth (26).

15. An axial flux motor or generator is proposed comprising the axial flux stator according to claim 14.
